# EUROPÄISCHE PATENTSCHRIFT

(11) **EP 3 123 707 B1**
(45) Veröffentlichungstag und Bekanntmachung des Hinweises auf die Patenterteilung: **25.07.2018**
(21) Anmeldenummer: 14841360.2
(22) Anmeldetag: 10.12.2014
(51) Int. Cl.: H04N 5/225, G03B 17/02, H05K 5/04

(54) **KAMERASYSTEM EINES FAHRASSISTENZSYSTEMS SOWIE VERFAHREN ZUR HERSTELLUNG EINES SOLCHEN**
CAMERA SYSTEM OF A DRIVER-ASSISTANCE SYSTEM, AND A METHOD FOR PRODUCING SAME
SYSTÈME DE CAMÉRA D'UN SYSTÈME D'AIDE À LA CONDUITE AINSI QUE PROCÉDÉ POUR LE FABRIQUER

(30) Priorität: 27.03.2014 DE 102014205708
(43) Veröffentlichungstag der Anmeldung: 01.02.2017
(73) Patentinhaber: Conti Temic Microelectronic GmbH, 90411 Nürnberg (DE)
(72) Erfinder: GRUBER, Andreas, 88171 Weiler-Simmerberg (DE); IGEL, Christoph, 89134 Blaustein (DE); MÜLLER, Gerhard, 88339 Bad Waldsee (DE); PFEIFFER, Franz, 89079 Ulm / Einsingen (DE); POWILEIT, Hendrik, 88313 Bodolz (DE); STEIDLE, Wolfgang, 88167 Röthenbach (DE)
(74) Vertreter: Büchner, Jörg
(86) Internationale Anmeldenummer: PCT/DE2014/200694
(87) Internationale Veröffentlichungsnummer: WO 2015/144109

(56) Entgegenhaltungen:
- EP-A2- 1 976 357
- DE-A1-102007 017 238
- US-A1- 2005 140 813

## Beschreibung

Die Erfindung betrifft ein Kamerasystem eines Fahrassistenzsystems sowie ein Verfahren zur Herstellung eines solchen Kamerasystems.

Ein solches Kamerasystem umfasst typischerweise ein Kameramodul zur Erzeugung von Bilddaten der Umgebung oder auch des Innenraumes eines Fahrzeuges. Mittels weiterer Elektronik, die entweder ein Teil des Kamerasystems ist oder anderswo im Fahrzeug angebracht ist, werden die Bilddaten verarbeitet, um beispielsweise ein Verkehrsrisiko zu ermitteln und darauffolgend eine entsprechende Warnung auszugeben. Typischerweise umfasst ein Kamerasystem ein Gehäuse, in welchem insbesondere das Kameramodul sowie eine weitere Platine mit Elektronik beispielsweise zur Weiterverarbeitung der Bilddaten angeordnet sind. Das Gehäuse ist an geeigneter Stelle im Fahrzeug eingebaut.

Um eine korrekte Anordnung und Ausrichtung des Kameramoduls im Gehäuse und insbesondere auch relativ des Fahrzeuges zu gewährlisten, ist das Gehäuse häufig als Druckgussteil ausgebildet. Hierdurch werden insbesondere Konturen und Positionierhilfen derart geschaffen, dass in dem Gehäuse eingebaute Komponenten geeignet positioniert sind. Nachteilig ist dabei, dass ein Druckgussverfahren kostenintensiv und aufwendig ist, insbesondere im Falle hoher Stückzahlen, wie dies für das genannte Kamerasystem der Fall sein kann.

Da typischerweise auch für Fahrzeuge geltende EMV-Richtlinien eingehalten werden sollen, ist das Gehäuse zusätzlich aus einem leitenden Material gefertigt und möglichst vollständig geschlossen. Durch diese Anforderung muss auch das Druckgussteil entsprechend ausgelegt werden und es ergibt sich insgesamt ein hoher Materialaufwand.

Ein Kameramodul für ein Kraftfahrzeug ist beispielsweise in der DE 10 2007 017 238 A1 beschrieben.

In der EP 1 976 357 A2 ist ein Gehäuse für eine elektrische Schaltung beschrieben sowie ein Verfahren zum Schließen eines entsprechenden Gehäuses.

Der Erfindung liegt daher die Aufgabe zugrunde ein verbessertes Kamerasystem anzugeben, welches einfach und kostengünstig herstellbar ist. Der Erfindung liegt weiterhin die Aufgabe zugrunde, ein Verfahren zur Herstellung eines solchen Kamerasystemes anzugeben.

Diese Aufgabe wird erfindungsgemäß gelöst durch ein Kamerasystem mit den Merkmalen des Anspruchs 1. Vorteilhafte Ausgestaltungen, Weiterbildungen und Varianten sind Gegenstand der Unteransprüche.

Hierzu ist vorgesehen, dass ein Kamerasystem eines Fahrassistenzsystems ein Kameramodul mit einer Optik aufweist, sowie ein Gehäuse, das ein erstes und ein zweites Gehäuseteil umfasst. Desweiteren sind die Gehäuseteile jeweils aus Blech gefertigt und wenigstens das erste Gehäuseteil ist ein Tiefziehteil. Weiterhin umfasst das Kamerasystem eine im Innenraum des Gehäuses angeordnete Platine. Solch ein Kamerasystem ist insbesondere kostengünstig herstellbar. Desweiteren ist das Gehäuse geeigneterweise ohne Druckgussteile herstellbar. Dabei ist der Innenraum im Wesentlichen komplett von dem Gehäuse eingehaust, wodurch sich insbesondere ein vorteilhaftes EMV-Verhalten ergibt. Insbesondere weist ein solches Gehäuse auch vorteilhafte Wärmeleiteigenschaften auf.

Die Gehäuseteile sind typischerweise zwei Gehäusehalbschalen mit jeweils einem Randbereich, wobei die Randbereiche miteinander geeignet verbunden sind und dadurch einen Innenraum bilden. Alternativ sind mehr als zwei Gehäuseteile vorgesehen, wodurch das Gehäuse flexibler gestaltbar ist.

Vorteilhafterweise sind die Gehäuseteile gemeinsam als ein Tiefziehteil ausgebildet sind und weisen einen verjüngten Bereich auf, der zum Schließen des Gehäuses umgebogen ist. Mit anderen Worten: das erste und das zweite Gehäuseteil sind zwei Abschnitte eines einzelnen Teiles, welches nach Anordnung von dem Kameramodul, der Platine und eventueller weiterer Komponenten zusammengeklappt und an den nun aneinanderliegenden Randbereichen geeignet verschlossen wird. Dazu sind die Gehäuseteile beispielsweise mittels eines Tiefziehverfahrens als einzelnes Teil derart ausgebildet, dass dieses in einem vorgegebenen Bereich verjüngt sind, das heißt eine reduzierte Materialstärke aufweist. Dieser Bereich ist dann insbesondere biegeelastisch und wird beim Zusammenklappen verbogen. Der Bereich ist insbesondere von den Randbereichen der Gehäuseteile umfasst.

Bevorzugterweise sind die Randbereiche der Gehäuseteile stoffschlüssig miteinander verbunden. Hierdurch ist insbesondere eine lückenlose EMV-Abschirmung realisierbar und damit eine Einhaltung von EMV-Richtlinien gewährleistet. Desweiteren wird vorteilhaft ein Eindringen von Schmutz verhindert.

Vorzugsweise ist jedes der Gehäuseteile als Tiefziehteil gefertigt, wodurch sich das Gehäuse im Vergleich zu Druckgussteilen kostengünstiger fertigen lässt. Mit anderen Worten: das Gehäuse ist ein Vollblechgehäuse, welches insbesondere kostengünstig und/oder in hoher Stückzahl herstellbar ist. Dadurch ist insbesondere auch eine Verwendung von Druckgussteilen vermeidbar, wodurch sich wiederum der Fertigungsaufwand für das Kamerasystem reduziert. Insbesondere weisen die als Tiefziehteile aus Blech ausgebildeten Gehäuseteile vorteilhaft eine geringe Materialstärke auf, wodurch sich insbesondere ein geringes Gewicht des Kamerasystems ergibt.

Bevorzugterweise sind das erste und das zweite Gehäuseteil miteinander verschweißt. Das Verschweißen erfolgt dabei beispielsweise durch ein Laserschweißverfahren und ist punktförmig oder durchgehend ausgeführt. In einer vorteilhaften Ausgestaltung sind die Randbereiche lediglich miteinander verschweißt und auf weitere Verbindungen ist verzichtet. Vorteilhaft ist hierbei auf Falzungen verzichtet. Unter Falzung wird dabei verstanden, dass die Randbereiche mittels eines geeigneten Falzwerkzeuges gemeinsam umgeschlagen, abgekantet oder aufgerollt werden. Dabei werden insbesondere zusätzliche Kanten und/oder Umschläge ausgebildet. Das heißt insbesondere, dass nach dem Fertigen der Gehäuseteile diese zusammengebracht werden und anschließend eine zusätzliche, gemeinsame Umformung stattfindet. Demgegenüber sind bei dem Gegenstand der vorliegenden Schrift die Randbereiche zum Schließen des Gehäuses lediglich auf einer Kontur aneinanderliegend miteinander verschweißt. Mit anderen Worten: die Randbereiche sind nicht mittels eines Falzverfahrens gemeinsam umgeschlagen. Insbesondere entfällt eine gemeinsame Umformung, wodurch die Gehäuseteile vorteilhaft jeweils separat fertigbar sind. Hierdurch ist das Kamerasystem besonders einfach herstellbar.

In einer geeigneten Ausgestaltung weist die Platine einen wenigstens teilweise metallisierten Platinenrand auf, der in einem durch die Randbereiche definierten Zwischenraum angeordnet ist und mit dem Gehäuse leitend verbunden ist. Hierdurch ist das Gehäuse insbesondere mit einem Massepotential verbindbar, wodurch zum Einen die Sicherheit des Kamerasystems und zum Anderen dessen EMV-Eigenschaften verbessert sind. Insbesondere ist auf diese Weise auch eine verbesserte Wärmeleitung zum Abführen von durch Komponenten innerhalb des Gehäuses erzeugter Wärme hergestellt.

Insbesondere im Falle eines zusammengeklappten Gehäuses, ist es vorteilhaft möglich, die Platine in den Randbereichen derart zu verklemmen, dass der verjüngte und in montiertem Zustand insbesondere verbogene Bereich um wenigstens einen Teil des Platinenrandes herumgebogen ist, beispielsweise in einem Winkel von etwa 180°. Dadurch ist die Platine insbesondere fixiert.

Der Randbereich des ersten Gehäuseteiles weist einen abgewinkelten Kragen auf. Dieser ermöglicht ein besonders einfaches Positionieren der Gehäuseteile derart zueinander, dass diese im Wesentlichen spaltfrei angeordnet sind. Insbesondere ist es dadurch möglich die Randbereiche gegeneinander zu verpressen, wodurch das Verschließen des Gehäuses weiter vereinfacht ist. Dazu ist der Kragen insbesondere umlaufend ausgebildet, wodurch eine entsprechend umlaufende Verschweißung ohne Zufuhr von zusätzlichem Material ausführbar ist. Dabei weist der Randbereich eine Anzahl von Ecken auf und unter umlaufend wird verstanden, dass der Kragen den Randbereich vorteilhaft unter Auslassung der Ecken umläuft. Durch Aussparen der Ecken wird insbesondere ein Tiefziehen des Kragens vereinfacht. Geeigneterweise ist der Kragen etwa rechtwinklig ausgebildet. Dadurch sind insbesondere Fertigungstoleranzen der Platine ausgleichbar. Mit anderen Worten: die Platine weist eine Materialstärke auf, die einer Fertigungstoleranz unterliegt, die durch geeignet tiefes Ineinandersetzen der Gehäuseteile ausgleichbar ist. Der Kragen erstreckt sich vorteilhaft in einer zur Platine im Wesentlichen senkrechten Richtung. Bevorzugt ist der Winkel nicht exakt 90°, wodurch insbesondere eine verbesserte Krafteinwirkung bei einem Verpressen der Gehäuseteile miteinander gewährleistet ist. Bevorzugterweise ist der Winkel kleiner als 90° und größer als 45°. Zweckmäßigerweise ist der Kragen vollständig umlaufend ausgebildet, das heißt, auch auf den Ecken, wodurch insbesondere eine vollständig umlaufende Verschweißung möglich ist.

Der Randbereich des zweiten Gehäuseteiles weist einen Kragen auf, wodurch insbesondere Fertigungstoleranzen der Gehäuseteile besser ausgleichbar sind. Dazu ist der Kragen des zweiten Gehäuseteiles in einem geeigneten Winkel derart ausgebildet, dass der Kragen des ersten Gehäuseteiles an einer Mantelfläche des Kragens des zweiten Gehäuseteiles angreift. Insbesondere sind mittels der beiden Kragen die bereits oben erwähnten Fertigungstoleranzen der Platine bezüglich deren Materialstärke derart ausgleichbar, dass die beiden Kragen je nach Materialstärke unterschiedlich tief ineinandergeschoben oder ineinander gepresst sind. Mit anderen Worten: die Kragen weisen insbesondere einen Überlappbereich auf, der vorteilhafterweise variabel einstellbar ist, das heißt insbesondere abhängig von der Materialstärke der Platine.

Grundsätzlich ist es möglich, dass das Kamerasystem mehrere Kameramodule aufweist und insbesondere als sogenanntes Stereokamerasystem ausgebildet ist. Die Aufgabe wird weiterhin erfindungsgemäß gelöst durch ein Verfahren mit den Merkmalen des Anspruchs 8. Vorteilhafte Ausgestaltungen, Weiterbildungen und Varianten sind Gegenstand der Unteransprüche. Insbesondere gelten die oben genannten Vorteile und Weiterbildungen auch sinngemäß für das beanspruchte Verfahren.

Bei einem Verfahren zur Herstellung eines Kamerasystemes eines Fahrassistenzsystems, mit einem Gehäuse, ist vorgesehen, dass ein aus Blech und als Tiefziehteil gefertigtes, erstes Gehäuseteil mit einem Randbereich bereitgestellt wird. Weiterhin wird ein aus Blech gefertigtes, zweites Gehäuseteil mit einem Randbereich bereitgestellt. Desweiteren werden die beiden Gehäuseteile zum Schließen des Gehäuses in deren Randbereichen miteinander verbunden. Vorteilhaft werden die Gehäuseteile lediglich in deren Randbereichen miteinander verbunden. Hierdurch lässt sich das Kamerasystem insbesondere kostengünstig und einfach fertigen.

Bevorzugterweise werden die beiden Gehäuseteile zum Schließen des Gehäuses in deren Randbereichen miteinander verschweißt. Das Verschweißen wird beispielsweise mittels eines Laserschweißverfahrens durchgeführt. Weiterhin werden die Gehäuseteile durchgehend und/oder punktförmig miteinander verschweißt. In einer vorteilhaften Ausgestaltung sind die Randbereiche lediglich miteinander verschweißt und auf weitere Verbindungen wird verzichtet. Vorteilhaft wird bei dem Verfahren auf Falzungen verzichtet. Wie bereits oben genannt, wird unter Falzung verstanden, dass die Randbereiche mittels eines geeigneten Falzwerkzeuges gemeinsam umgeschlagen, abgekantet oder aufgerollt werden. Hierdurch werden insbesondere zusätzliche Kanten und/oder Umschläge ausgebildet. Demgegenüber werden bei dem in dieser Schrift genannten Verfahren die Randbereiche zum Schließen des Gehäuses zunächst aufeinander und/oder aneinander angeordnet und verschweißt. Mit anderen Worten: die Randbereiche werden nicht mittels eines Falzverfahrens gemeinsam umgeschlagen. Insbesondere werden die Gehäuseteile jeweils zunächst separat gefertigt, darauffolgend zusammengebracht und dann verbunden. Hierdurch ist das Kamerasystem besonders einfach herstellbar.

Beim Anordnen der Gehäuseteile aneinander verbleibt möglicherweise aufgrund von Fertigungstoleranzen ein Spalt mit einer bestimmten Breite. Geeigneterweise werden daher die Gehäuseteile beim Verschweißen gegeneinander gepresst. Hierdurch wird insbesondere die Breite des der Spaltes reduziert. Weiterhin ist es hierbei insbesondere möglich, auf eine Zufuhr von zusätzlichem Material beim Schweißen zu verzichten. Die Herstellung des Kamerasystems wird dadurch vorteilhaft vereinfacht. Das Gegeneinanderpressen wird beispielsweise mittels einer Presse durchgeführt, die zwei Formwerkzeuge aufweist. Die Gehäuseteile werden jeweils in eines der Formwerkzeuge eingelegt, in einer Pressrichtung aufeinander zu bewegt und schließlich in einer geeigneten Position zusammengebracht. Dazu sind die Formwerkzeuge bevorzugt derart ausgebildet, dass diese lediglich auf den Randbereichen mit dem jeweiligen Gehäuseteil in Kontakt gebracht werden. Hierdurch kann insbesondere eine optimale Presskraft auf die Randbereiche oder auf Teile der Randbereiche ausgeübt werden. Zusätzlich bleiben nicht zu verpressende Bereiche des Gehäuses vorteilhaft frei von Presskräften.

Geeigneterweise werden die Gehäuseteile aus einem biegeelastischen Material gefertigt, wodurch beim Gegeneinanderpressen insbesondere Fertigungstoleranzen ausgeglichen werden. Vorteilhafterweise werden die Gehäuseteile möglichst passgenau gefertigt, wodurch insbesondere lediglich eine geringe oder gar keine Presskraft benötigt wird, um die Gehäuseteile zusammenzubringen. Die Presse kann dadurch vorteilhaft mit einer geringen Presskraft ausgelegt werden.

In den Randbereichen wird jeweils ein Kragen ausgebildet und die Kragen werden miteinander verpresst. Hierdurch ist ein beispielsweise gegenüber Schmutz besonders dichtes Gehäuse realisierbar. Dabei wird der eine Kragen geeigneterweise beim Verpressen gegen den anderen Kragen geringfügig verbogen. Dazu weist die Presse vorteilhafterweise an wenigstens einem der Formwerkzeuge eine geeignete Kontur auf, die als Führung für das Verbiegen dient. Das Verpressen gewährleistet vorteilhafterweise einen möglichst geringen verbleibenden Spalt zwischen den Gehäuseteilen. Mit anderen Worten: durch das Verpressen findet eine insbesondere finale Formanpassung der Gehäuseteile zueinander statt. Dadurch ist es vorteilhaft möglich, nicht exakt passgenau gefertigte Gehäuseteile zu verwenden und dabei insbesondere ein dichtes Gehäuse herzustellen. Durch reduzierte Anforderungen an eine passgenaue Fertigung der Gehäuseteile ist ein solches Gehäuse insbesondere günstiger herzustellen. Unter dicht wird dabei beispielsweise dicht gegenüber Schmutz und/oder Wasser verstanden, und/oder auch dicht im Sinne vorteilhafter EMV-Eigenschaften. Geeigneterweise sind jegliche aus dem Gehäuse herausführende Teile, beispielsweise Anschlüsse und/oder insbesondere auch die Optik derart ausgeführt, dass ein besonders dichtes Gehäuse vorliegt. Dazu sind die entsprechenden Teile beispielsweise mit dem Gehäuse verschweißt oder weisen geeignete Dichtelemente auf.

Bevorzugterweise wird wenigstens einer der Randbereiche durch Verpressen von einer Ausgangsform in eine Endform gebracht wird. Unter Ausgangsform wird dabei verstanden, dass der Randbereich vor einem Verpressen in einer Ausgangsstellung vorliegt. Das Verpressen bewirkt dann eine Umformung, insbesondere ein Verbiegen des Randbereiches. Insbesondere in Kombination mit einem auf dem Randbereich ausgebildeten Kragen wird hierbei ein Verbiegen dieses Kragens verstanden. Beispielsweise ist der Kragen in der Ausgangsform in einem vorgegebenen Winkel abgewinkelt und wird durch das Verpressen weiter abgewinkelt, das heißt insbesondere, dass der Winkel vergrößert wird. Dadurch wird der Randbereich zweckmäßigerweise in die Endform überführt. Unter Endform wird dabei verstanden, dass der Randbereich in montiertem, das heißt insbesondere geschlossenem Zustand des Gehäuses in dieser Endform vorliegt.

Bevorzugt sind sowohl das erste wie auch das zweite Gehäuseteil jeweils ein Tiefziehteil und die Kragen werden bereits beim Tiefziehen ausgebildet, wodurch insbesondere deren Fertigung vereinfacht wird. Dabei werden die Kragen bevorzugt als abgewinkelte Teilbereiche der Randbereiche ausgebildet. Hierdurch wird insbesondere eine Positionierung der Gehäuseteile aneinander vereinfacht. Bevorzugt weisen die Kragen dazu in die gleiche Richtung.

Nachfolgend wird ein Ausführungsbeispiel der Erfindung anhand einer Zeichnung näher erläutert. Darin zeigen:
- Fig. 1: in schematischer Darstellung eine Schnittansicht eines Kamerasystems mit einem Gehäuse,
- Fig. 2: in schematischer Darstellung zwei Gehäuseteile des Kamerasystem gemäß Fig. 1 vor einem Verpressen,
- Fig. 3: in schematischer Darstellung die Gehäuseteile gemäß Fig. 2 nach dem Verpressen und durch eine Schweißnaht miteinander verbunden, und
- Fig. 4: in schematischer Darstellung zwei alternative Gehäuseteile, die gemeinsam als Tiefziehteil ausgebildet sind.

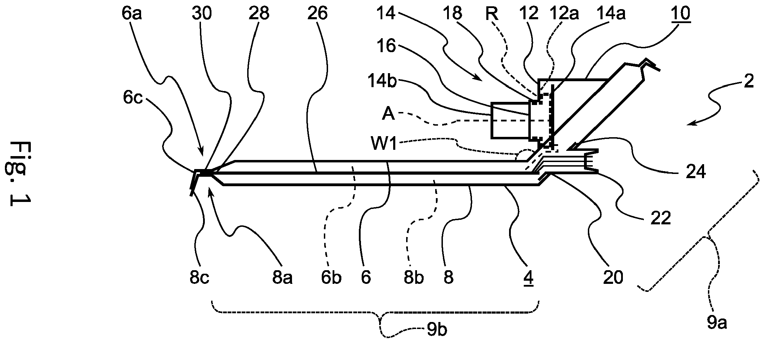

Fig. 1 zeigt in schematischer Darstellung eine Schnittansicht eines Kamerasystems 2 mit einem Gehäuse 4. Dieses umfasst ein erstes Gehäuseteil 6 und ein zweites Gehäuseteil 8, die hier als Tiefziehteile und aus Blech gefertigt sind. Beide Gehäuseteile 6,8 sind gewinkelt ausgeformt und bilden ein Schenkelpaar 9a, 9b, welches einen stumpfen Winkel W1 einschließt. Das erste Gehäuseteil 6 liegt dabei innenseitig, das zweite Gehäuseteil 8 außenseitig. Beide Gehäuseteile 6,8 sind auf jedem der Schenkel 9a,9b schalenartig ausgebildet. Das heißt, beide Gehäuseteile 6,8 weisen jeweils eine von einem Randbereich 6a,8a umlaufene Mulde 6b,8b oder auch Vertiefung auf, wobei die Randbereiche 6a,8a in dem hier gezeigten Ausführungsbeispiel vollständig umlaufend ausgebildet sind. Da die Gehäuseteile 6,8 jeweils abgewinkelt sind, sind auch die jeweiligen Mulden 6b,8b und Randbereiche 6a,8a abgewinkelt. Auf den Schenkeln 9a,9b bilden die Randbereiche 6a,8a jeweils eine U-förmige Umrandung. Durch diese U-Form ist insbesondere eine Anzahl von Ecken auf der Umrandung ausgebildet. Beispielsweise umfasst die U-Form drei im Wesentlichen gerade Seiten, mit zwei Verbindungspunkten, an denen jeweils eine Ecke ausgebildet ist.

In den Randbereichen 6a,8a ist zusätzlich jeweils ein Kragen 6c,8c ausgebildet, der geeigneterweise als abgewinkelter Teil des jeweiligen Randbereiches 6a,8a aus diesem durch Tiefziehen ausgeformt ist. Die Kragen 6c,8c sind dabei vollständig umlaufend, das heißt auch über Eck ausgestaltet. In einer alternativen Ausgestaltungsform sind die Ecken ausgelassen. Beide Kragen 6c,8c überlappen in montiertem Zustand und sind miteinander verschweißt. Beim Zusammensetzen der Gehäuseteile 6,8 entlang der Kragen 6c, 8c werden diese gegeneinandergedrückt und miteinander verpresst, wodurch ein beispielsweise aufgrund von Fertigungstoleranzen zwischen den Kragen 6c, 8c liegender Spalt derart reduziert ist, dass ein Verschweißen ohne Zufuhr von zusätzlichem Material durchführbar ist.

Durch geeignetes Auslegen der zur Herstellung des ersten Gehäuseteiles 6 verwendeten Tiefziehform ist an diesem sowie auf dem ersten Schenkel 9a weiterhin ein Aufbau 10 mit einer Anzahl von Seitenwänden sowie einer Stirnwand 12 angeformt. Mit anderen Worten: der Aufbau 10 ist durch Tiefziehen aus dem ersten Gehäuseteil 6 ausgeformt. Dabei weist der Aufbau 10 senkrecht zur Zeichenebene eine geringere Breite als das erste Gehäuseteil 6 auf. Desweiteren ist das Gehäuse 4 nicht notwendigerweise spiegelsymmetrisch bezüglich der Zeichenebene.

Die Stirnwand 12 bildet gehäuseinnenseitig eine Referenzfläche 12a zur Ausrichtung eines Kameramoduls 14. Dazu umfasst dieses eine Kameramodulplatine 14a, an dem eine Optik 14b derart angeordnet ist, dass diese innenseitig an der Referenzfläche 12a anliegt. Dazu ist die Optik 14b in dem hier gezeigten Ausführungsbeispiel nach Art zweier in Richtung der optischen Achse A hintereinander angeordneter Zylinder ausgestaltet. Dadurch ergibt sich eine ringförmige Fläche R, die an der Referenzfläche 12a anliegt. In Fig. 1 ist der gehäuseinnenseitig liegende Teil der Optik 14b gestrichelt dargestellt. Desweiteren ist die Optik 14b ist mit der Referenzfläche 12a verbunden, beispielsweise verklebt. In einer alternativen Ausgestaltung ist das Optikgehäuse aus einem Metall gefertigt und mit dem Gehäuse verschweißt.

Die Optik 14b ragt durch eine geeignete Öffnung 16 aus dem Gehäuse 4 heraus. Die Öffnung 16 ist von einer ebenfalls beim Tiefziehen ausgebildeten Kragenkontur 18 umfasst. Diese dient weiterhin dazu, die Optik 14b auszurichten und zu haltern. Insbesondere weist die Optik 14b eine optische Achse A auf, die senkrecht sowohl zur Kameramodulplatine 14a als auch zur Referenzfläche 12a verläuft. In dem hier gezeigten Ausführungsbeispiel ist die Referenzfläche 12a senkrecht zum zweiten Schenkel 9b. Somit verläuft die optische Achse A parallel zu diesem. In einer alternativen Ausführungsform ist die Referenzfläche 12a nicht senkrecht zum zweiten Schenkel 9b.

In dem zweiten Gehäuseteil 8 ist weiterhin eine Öffnung 20 eingebracht zum Durchführen eines Anschlusses 22, der hier als Steckkupplung ausgebildet ist. In dem hier gezeigten Ausführungsbeispiel ist die Öffnung 20 auf der dem Aufbau 10 und der Optik 14b gegenüberliegenden Seite des ersten Schenkels 9a angeordnet. Der Anschluss 22 dient unter Anderem zur Energieversorgung des Kamerasystems 2. Der Anschluss 22 ist mit einem Flansch 24 versehen, mittels dessen der Anschluss 22 gehäuseinnenseitig an dem Gehäuseteil 8 anliegt und dadurch positioniert ist. Der Anschluss 22 ist weiterhin mit einer Platine 26 verbunden. Diese ist wiederum mit der Kameramodulplatine 14a verbunden. Auf diese Weise ist das Kameramodul mit Energie versorgt und Bilddaten sind zur Platine 26 übertragbar.

Die Platine 26 ist in dem zweiten Schenkel 9b des Gehäuses 4 mittels einer hier nicht gezeigten, geeigneten Positionierhilfe angeordnet und verrutschsicher gehaltert. Die Positionierhilfe umfasst beispielsweise eine Anzahl von zusätzlichen Ausformungen eines der Gehäuseteile 6,8, wobei die Platine 26 an diesen Ausformungen angelegt ist oder geeignete Gegenstücke aufweist, die in die Ausformungen eingreifen, diese umgreifen oder anderweitig mit diesen verbunden sind. In einer alternativen Ausgestaltung ist die Platine 26 zwischen geeignet ausgeformten Stellen der Gehäuseteile 6,8 eingeklemmt. Insbesondere weist die Platine 26 in dem hier gezeigten Ausführungsbeispiel einen Platinenrandbereich 28 auf, der in einem durch die Randbereiche 6a,8a der Gehäuseteile 6,8 definierten Zwischenraum 30 einliegt. Dabei sind die Randbereiche 6a,8a derart ausgestaltet, dass diese das Gehäuse 4 im Bereich des Schenkels 9b U-förmig umlaufen. Dadurch ist die Platine 26 auf drei Seiten durch die beiden Gehäuseteile 6,8 eingeklemmt und insbesondere verrutschsicher gehalten.

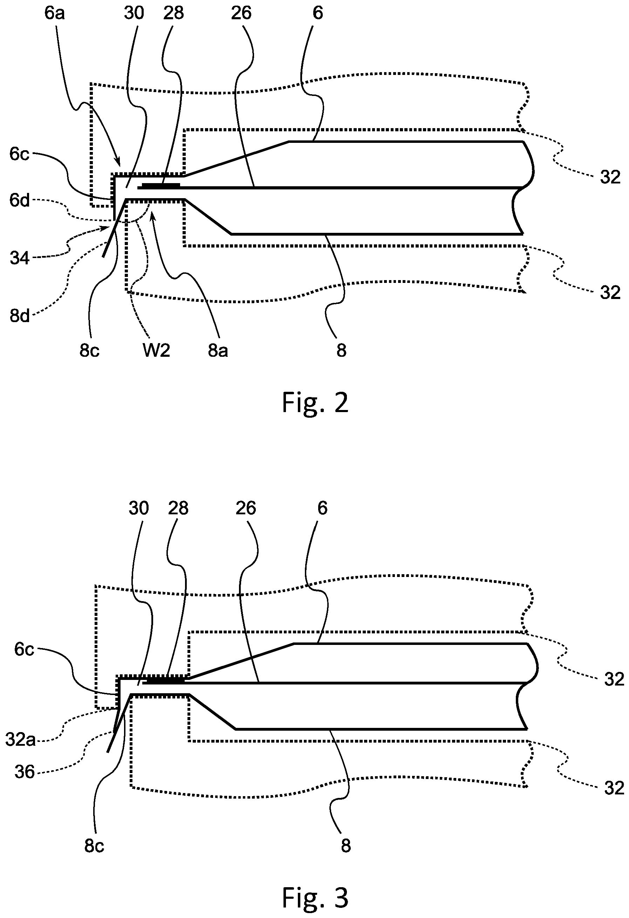

Die Fig. 2 und 3 zeigen in schematischer Darstellung einen Teil des Kameragehäuses 2 gemäß Fig. 1. Zum Verbinden der beiden Gehäuseteile 6,8 werden diese in eine Presse 32 eingelegt und die Randbereiche 6a,8a gegeneinander verpresst. Der Kragen 6c des ersten Gehäuseteiles 6 ist hier rechtwinklig relativ zum verbleibenden Teil des Randbereiches 6a ausgebildet und umfasst eine Kragenkante 6d. Der Kragen 8c des zweiten Gehäuseteiles 8 ist in einem stumpfen Winkel W2 mit einer nach außen weisenden Kragenfläche 8d ausgebildet.

Aus Fig. 2 wird deutlich, dass das erste Gehäuseteil 6 beim Auflegen auf das zweite Gehäuseteil 8 mit der Kragenkante 6d an der Kragenfläche 8d angreift. Insbesondere liegen der Kragen 6c und damit auch der Randbereich 6a in Fig. 2 in einer Ausgangsform vor. Durch Verpressen werden nun die Kragen 6c,8c gegeneinander gepresst. Dabei sind die Gehäuseteile 6,8 aus einem biegeelastischen Material gefertigt, um in geringem Maße eine Verformung der Kragen 6c,8c zu ermöglichen. Dies ist besonders deutlich in Fig. 3 dargestellt. Dabei wird der Kragen 6c beim Pressen gegen den Kragen 8c geringfügig verbogen und insbesondere in eine Endform überführt. Dabei gibt die Presse 32 durch ihre Kontur insbesondere eine Kante 32a vor, die als Führung für das Verbiegen dient. Dabei wird der Kragen 6b lediglich leicht angewinkelt. Das Verpressen gewährleistet einen möglichst geringen verbleibenden Spalt 34 zwischen den beiden Gehäuseteilen 6,8. Mit anderen Worten: durch das Verpressen findet eine insbesondere finale Formanpassung der Gehäuseteile 6, 8 zueinander statt. Dadurch ist es insbesondere möglich nicht exakt passgenau gefertigte Gehäuseteile 6, 8 zu verwenden. In einer hier nicht gezeigten Ausführungsform wird auf das Verpressen verzichtet, da insbesondere die Kragen 6c, 8c hinreichend passgenau gefertigt sind und dadurch auch ohne Verpressen ohne zusätzliche Materialzufuhr verschweißbar sind.

Fig. 3 zeigt in schematischer Darstellung die Gehäuseteile 6,8 gemäß Fig. 2, die hier verpresst und zusätzlich mittels einer Schweißnaht 36 verschweißt sind. Dabei ist die Schweißnaht 36 in dem hier gezeigten Ausführungsbeispiel derart ausgebildet, dass diese die Gehäuseteile 6,8 vollständig umläuft und diese in den Randbereichen 6a,8a miteinander verbindet. Mit anderen Worten: die Schweißnaht 36 stellt eine umlaufende, stoffschlüssige Verbindung der beiden Kragen 6c,8c her. Dazu ist die Schweißnaht 36 stirnseitig an der Kragenkante 6d ausgebildet. Desweiteren zeigt Fig. 3 deutlich, dass in verpresstem und verschweißtem Zustand im Platinenrandbereich 28 eine leitende Verbindung zum ersten Gehäuseteil 6 hergestellt ist. Diese dient insbesondere zur verbesserten Wärmeabfuhr.

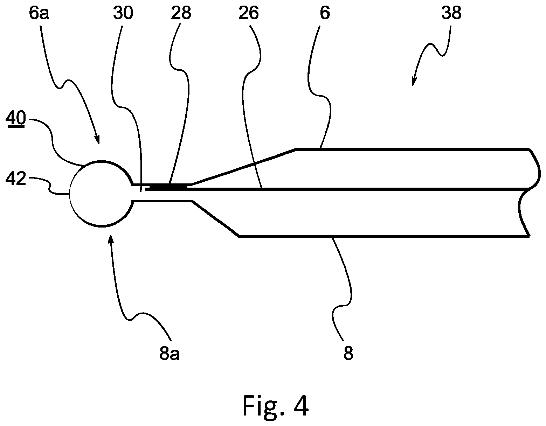

Eine alternative Ausführungsform ist in Fig. 4 dargestellt, in der die beiden Gehäuseteile 6, 8 gemeinsam als ein einzelnes Tiefziehteil 38 ausgebildet sind. In den Randbereichen 6a, 8a sind die Gehäuseteile 6, 8 mittels eines verjüngten Bereiches 40 zu dem einzelnen Tiefziehteil 38 verbunden. Der Bereich 40 ist dabei ein Teil des jeweiligen Randbereiches 6a, 8a und führt diese zusammen. Durch die verjüngte Ausführung entsteht vorteilhaft eine Sollbiegestelle 42. Diese ist bei der Herstellung zunächst plan und wird beim Zusammenbau des Gehäuses 4 verbogen. In dem hier gezeigten Ausführungsbeispiel findet dabei eine Verbiegung um 180° statt. Insbesondere ist dabei der Randbereich 28 der Platine 26 in den Randbereichen 6a, 8a vorteilhaft eingeklemmt.

### Bezugszeichenliste

- 2: Kamerasystem
- 4: Gehäuse
- 6: erstes Gehäuseteil
- 6a: Randbereich
- 6b: Mulde
- 6c: Kragen
- 6d: Kragenkante
- 8: zweites Gehäuseteil
- 8a: Randbereich
- 8b: Mulde
- 8c: Kragen
- 8d: Kragenfläche
- 10: Aufbau
- 12: Stirnwand
- 12a: Referenzfläche
- 14: Kameramodul
- 14a: Kameramodulplatine
- 14b: Optik
- 16: Öffnung
- 18: Kragenkontur
- 20: Öffnung
- 22: Anschluss
- 24: Flansch
- 26: Platine
- 28: Platinenrandbereich
- 30: Zwischenraum
- 32: Presse
- 32a: Kante
- 34: Spalt
- 36: Schweißnaht
- 38: Tiefziehteil
- 40: verjüngter Bereich
- 42: Sollbiegestelle

- A: optische Achse
- R: ringförmige Fläche
- W1: Winkel
- W2: Winkel

### Bezugszeichenliste

- 2: Kamerasystem
- 4: Gehäuse
- 6: erstes Gehäuseteil
- 6a: Randbereich
- 6b: Mulde
- 6c: Kragen
- 6d: Kragenkante
- 8: zweites Gehäuseteil
- 8a: Randbereich
- 8b: Mulde
- 8c: Kragen
- 8d: Kragenfläche
- 10: Aufbau
- 12: Stirnwand
- 12a: Referenzfläche
- 14: Kameramodul
- 14a: Kameramodulplatine
- 14b: Optik
- 16: Öffnung
- 18: Kragenkontur
- 20: Öffnung
- 22: Anschluss
- 24: Flansch
- 26: Platine
- 28: Platinenrandbereich
- 30: Zwischenraum
- 32: Presse
- 32a: Kante
- 34: Spalt
- 36: Schweißnaht

## Patentansprüche

1. Kamerasystem (2) eines Fahrassistenzsystems, mit einem eine Optik (14b) aufweisenden Kameramodul (14), mit einem Gehäuse (4), das ein erstes und ein zweites, jeweils aus Blech gefertigtes Gehäuseteil (6,8) mit jeweils einem Randbereich (6a,8a) umfasst, und mit einer in dem Gehäuse (4) angeordneten Platine (26), wobei wenigstens das erste Gehäuseteil (6) ein Tiefziehteil ist und zum Schließen des Gehäuses (4) das erste und das zweite Gehäuseteil (6,8) in deren Randbereichen (6a,8a) miteinander verbunden sind,
wobei die Platine (26) einen Platinenrandbereich (28) aufweist, der in einem durch die Randbereiche (6a, 8a) der Gehäuseteile (6, 8) definierten Zwischenraum (30) einliegt,
wobei der Randbereich (6a) des ersten Gehäuseteiles (6) einen abgewinkelten Kragen (6c) aufweist, zum Ausgleich von Fertigungstoleranzen der Platine (26),
wobei der Randbereich (8a) des zweiten Gehäuseteiles (8) einen Kragen (8c) aufweist, zum Ausgleich von Fertigungstoleranzen des Gehäuses (4), wobei der Kragen (6c) des ersten Gehäuseteiles (6) an einer Mantelfläche des Kragens (8c) des zweiten Gehäuseteiles (8) angreift,
wobei die Kragen (6c, 8c) miteinander verpresst sind, zur finalen Formanpassung der Gehäuseteile (6, 8) zueinander.

2. Kamerasystem (2) nach dem vorhergehenden Anspruch,
**dadurch gekennzeichnet,**
**dass** die Gehäuseteile (6,8) gemeinsam als ein Tiefziehteil (38) ausgebildet sind und einen verjüngten Bereich (40) aufweisen, der zum Schließen des Gehäuses gebogen ist.

3. Kamerasystem (2) nach einem der vorhergehenden Ansprüche,
**dadurch gekennzeichnet,**
**dass** die Randbereiche (6a,8a) der Gehäuseteile (6,8) stoffschlüssig miteinander verbunden sind.

4. Kamerasystem (2) nach einem der vorhergehenden Ansprüche,
**dadurch gekennzeichnet,**
**dass** das erste und das zweite Gehäuseteil (6,8) miteinander verschweißt sind.

5. Kamerasystem (2) nach einem der vorhergehenden Ansprüche,
**dadurch gekennzeichnet,**
**dass** die Platine (26) einen wenigstens teilweise metallisierten Platinenrand (28) aufweist, der in einem durch die Randbereiche (6a,8a) definierten Zwischenraum (30) angeordnet ist und mit dem Gehäuse (4) leitend verbunden ist.

6. Kamerasystem (2) nach einem der vorhergehenden Ansprüche,
**dadurch gekennzeichnet,**
**dass** der Kragen (6c) umlaufend ausgebildet ist.

7. Kamerasystem (2) nach einem der vorhergehenden Ansprüche,
**dadurch gekennzeichnet,**
**dass** der Kragen (6c) in einem Winkel (W2) von etwa 90° ausgebildet ist, vorzugsweise kleiner 90° und größer 45°.

8. Verfahren zur Herstellung eines Kamerasystem (2) eines Fahrassistenzsystems, mit einem eine Optik (14b) aufweisenden Kameramodul (14), mit einem Gehäuse (4) und mit einer in diesem angeordneten Platine (26), umfassend die Schritte:
- Bereitstellen eines aus Blech gefertigten, ersten Gehäuseteiles (6) als Tiefziehteil mit einem Randbereich (6a) und
- Bereitstellen eines aus Blech gefertigten, zweiten Gehäuseteiles (8) mit einem Randbereich (8a), wobei die beiden Gehäuseteile (6,8) zum Schließen des Gehäuses (4) in deren Randbereichen (6a,8a) miteinander verbunden werden,
wobei die Platine (26) einen Platinenrandbereich (28) aufweist, der in einem durch die Randbereiche (6a, 8a) der Gehäuseteile (6, 8) definierten Zwischenraum (30) einliegt,
wobei der Randbereich (6a) des ersten Gehäuseteiles (6) einen abgewinkelten Kragen (6c) aufweist, zum Ausgleich von Fertigungstoleranzen der Platine (26),
wobei der Randbereich (8a) des zweiten Gehäuseteiles (8) einen Kragen (8c) aufweist, zum Ausgleich von Fertigungstoleranzen des Gehäuses (4), wobei der Kragen (6c) des ersten Gehäuseteiles (6) an einer Mantelfläche des Kragens (8c) des zweiten Gehäuseteiles (8) angreift,
wobei die Kragen (6c, 8c) miteinander verpresst werden, zur finalen Formanpassung der Gehäuseteile (6, 8) zueinander.

9. Verfahren nach dem vorhergehenden Verfahrensanspruch,
**dadurch gekennzeichnet,**
**dass** die beiden Gehäuseteile (6,8) zum Schließen des Gehäuses (4) in deren Randbereichen (6a,8a) miteinander verschweißt werden.

10. Verfahren nach einem der vorhergehenden Verfahrensansprüche,
**dadurch gekennzeichnet,**
**dass** die Gehäuseteile (6,8) beim Verschweißen gegeneinander gepresst werden.

11. Verfahren nach einem der vorhergehenden Verfahrensansprüche,
**dadurch gekennzeichnet,**
**dass** wenigstens einer der Randbereiche (6a, 8a) durch Verpressen von einer Ausgangsform in eine Endform gebracht wird.

12. Verfahren nach einem der vorhergehenden Verfahrensansprüche,
**dadurch gekennzeichnet,**
**dass** in den Randbereichen (6a, 8a) jeweils ein Kragen (6c, 8c) ausgebildet wird und die Kragen (6c, 8c) miteinander verpresst werden.

## Claims

1. A camera system (2) of a driver assistance system, comprising a camera module (14) having a lens (14b), a housing (4) that comprises a first and a second housing part (6, 8) both produced from sheet metal and both having an edge region (6a, 8a), and a printed circuit board (26) arranged in said housing (4), at least the first housing part (6) being a deep-drawn part, and said first and second housing parts (6, 8) being interconnected in their edge regions (6a, 8a) for the purpose of closing the housing (4), wherein the printed circuit board (26) has a printed circuit board edge region (28) which is inserted in an intermediate space (30) defined by the edge regions (6a, 8a) of the housing parts (6, 8),
wherein the edge region (6a) of the first housing part (6) has an angled collar (6c), in order to even out production tolerances of the printed circuit board (26),
wherein the edge region (8a) of the second housing part (8) has a collar (8c), in order to even out production tolerances of the housing (4), wherein the collar (6c) of the first housing part (6) acts upon a casing surface of the collar (8c) of the second housing part (8),
wherein the collars (6c, 8c) are compressed together in order to finally shape-match the housing parts (6, 8) to one another.

2. The camera system (2) according to the preceding claim,
**characterised in that**
the housing parts (6,8) are configured jointly as a deep-drawn part (38) and have a tapered region (40) which is bent in order to close the housing.

3. The camera system (2) according to any one of the preceding claims,
**characterised in that**
the edge regions (6a,8a) of the housing parts (6,8) are adhesively interconnected.

4. The camera system (2) according to any one of the preceding claims,
**characterised in that**
the first and the second housing parts (6,8) are welded together.

5. The camera system (2) according to any one of the preceding claims,
**characterised in that**
the printed circuit board (26) has an at least partially metallized printed circuit board edge (28) which is arranged in an intermediate space (30) defined by the edge regions (6a, 8a) and which is conductively connected to the housing (4).

6. The camera system (2) according to any one of the preceding claims,
**characterised in that**
the collar (6c) is configured circumferentially.

7. The camera system (2) according to any one of the preceding claims,
**characterised in that**
the collar (6c) is configured at an angle (W2) of approximately 90°, preferably less than 90° and greater than 45°.

8. A method for manufacturing a camera system (2) of a driver assistance system, comprising a camera module (14) having a lens (14b), a housing (4), and a printed circuit board (26) arranged therein, comprising the following steps of:
- providing a first housing part (6) which is produced from sheet metal in the form of a deep-drawn part and which has an edge region (6a), and
- providing a second housing part (8) which is produced from sheet metal and which has an edge region (8a), the two housing parts (6, 8) being interconnected in their edge regions (6a, 8a) for the purpose of closing the housing (4),
wherein the printed circuit board (26) has a printed circuit board edge region (28) which is inserted in an intermediate space (30) defined by the edge regions (6a, 8a) of the housing parts (6, 8),
wherein the edge region (6a) of the first housing part (6) has an angled collar (6c), in order to even out production tolerances of the printed circuit board (26),
wherein the edge region (8a) of the second housing part (8) has a collar (8c), in order to even out production tolerances of the housing (4), wherein the collar (6c) of the first housing part (6) acts upon a casing surface of the collar (8c) of the second housing part (8),
wherein the collars (6c, 8c) are compressed together in order to finally shape-match the housing parts (6, 8) to one another.

9. The method according to the preceding method claim,
**characterised in that**
the two housing parts (6,8) are welded together in order to close the housing (4) in their edge regions (6a,8a).

10. The method according to any one of the preceding method claims,
**characterised in that**
the housing parts (6, 8) are pressed against one another during welding.

11. The method according to any one of the preceding method claims,
**characterised in that**
at least one of the edge regions (6a, 8a) is brought from an initial shape into a final shape by means of compressing.

12. The method according to any one of the preceding method claims,
**characterised in that**
one collar (6c, 8c) each is configured in the edge regions (6a, 8a) and the collars (6c, 8c) are compressed together.

## Revendications

1. Système de caméra (2) d'un système d'aide à la conduite, avec un module de caméra (14) présentant une optique (14b), avec un boîtier (4) qui comprend une première et une deuxième parties de boîtier (6, 8), respectivement fabriquées en tôle, respectivement avec une zone de bord (6a, 8a), et avec une platine (26) disposée dans le boîtier (4), au moins la première partie de boîtier (6) étant une pièce emboutie et la première et la deuxième parties de boîtier (6, 8) étant reliées l'une à l'autre dans leurs zones de bord (6a, 8a), pour fermer le boîtier (4),
la platine (26) présentant une zone de bord de platine (28), laquelle est logée dans un espace intermédiaire (30) défini par les zones de bord (6a, 8a) des pièces de boîtier (6, 8),
la zone de bord (6a) de la première pièce de boîtier (6) présentant une collerette pliée (6c), pour la compensation de tolérances de fabrication de la platine (26),
la zone de bord (8a) de la deuxième pièce de boîtier (8) présentant une collerette (8c), pour la compensation de tolérances de fabrication du boîtier (4), la collerette (6c) de la première pièce de boîtier (6) s'engageant sur une surface d'enveloppe de la collerette (8c) de la deuxième pièce de boîtier (8),
les collerettes (6c, 8c) étant pressées l'une avec l'autre pour l'adaptation de forme finale des pièces de boîtier (6, 8) l'une à l'autre.

2. Système de caméra (2) selon la revendication précédente,
**caractérisé en ce que**
les pièces de boîtier (6, 8) sont formées ensemble comme une pièce emboutie (38) et présentent une zone rétrécie (40), laquelle est incurvée pour la fermeture du boîtier.

3. Système de caméra (2) selon l'une des revendications précédentes,
**caractérisé en ce que**
les zones de bord (6a, 8a) des pièces de boîtier (6, 8) sont reliées entre elles par liaison de matière.

4. Système de caméra (2) selon l'une des revendications précédentes,
**caractérisé en ce que**
la première et la deuxième pièces de boîtier (6, 8) sont soudées entre elles.

5. Système de caméra (2) selon l'une des revendications précédentes,
**caractérisé en ce que**
la platine (26) présente une zone de bord de platine (28) au moins partiellement métallisée, laquelle est disposée dans un espace intermédiaire (30) défini par les zones de bord (6a, 8a) et est reliée de façon conductrice avec le boîtier (4).

6. Système de caméra (2) selon l'une des revendications précédentes,
**caractérisé en ce que**
la collerette (6c) est formée sur toute la circonférence.

7. Système de caméra (2) selon l'une des revendications précédentes,
**caractérisé en ce que**
la collerette (6c) est formée avec un angle (W2) d'environ 90°, de préférence inférieur à 90° et supérieur à 45°.

8. Procédé pour la fabrication d'un système de caméra (2) d'un système d'aide à la conduite, avec un module de caméra (14) présentant une optique (14b), avec un boîtier (4) et avec une platine (26) disposée dans celui-ci, comprenant les étapes de :
- mise à disposition d'une première pièce de boîtier (6) fabriquée en tôle comme pièce emboutie avec une zone de bord (6a) et
- mise à disposition d'une deuxième pièce de boîtier (8) fabriquée en tôle, avec une zone de bord (8a), les deux pièces de boîtier (6, 8) étant reliées l'une à l'autre dans leurs zones de bord (6a, 8a) pour la fermeture du boîtier (4),
la platine (26) présentant une zone de bord de platine (28), laquelle est logée dans un espace intermédiaire (30) défini par les zones de bord (6a, 8a) des pièces de boîtier (6, 8),
la zone de bord (6a) de la première pièce de boîtier (6) présentant une collerette pliée (6c), pour la compensation de tolérances de fabrication de la platine (26),
la zone de bord (8a) de la deuxième pièce de boîtier (8) présentant une collerette (8c), pour la compensation de tolérances de fabrication du boîtier (4), la collerette (6c) de la première pièce de boîtier (6) s'engageant sur une surface d'enveloppe de la collerette (8c) de la deuxième pièce de boîtier (8),
les collerettes (6c, 8c) étant pressées l'une avec l'autre pour l'adaptation de forme finale des pièces de boîtier (6, 8) l'une à l'autre.

9. Procédé selon la revendication de procédé précédente,
**caractérisé en ce que**
les deux pièces de boîtier (6, 8) sont soudées l'une avec l'autre dans leurs zones de bord (6a, 8a) pour la fermeture du boîtier (4).

10. Procédé selon l'une des revendications de procédé précédentes,
**caractérisé en ce que**
les pièces de boîtier (6, 8) sont pressées l'une contre l'autre par soudage.

11. Procédé selon l'une des revendications de procédé précédentes,
**caractérisé en ce qu'**
au moins l'une des zones de bord (6a, 8a) passe d'une forme initiale à une forme finale par pressage.

12. Procédé selon l'une des revendications de procédé précédentes,
**caractérisé en ce qu'**
une collerette (6c, 8c) est formée respectivement dans les zones de bord (6a, 8a) et **en ce que** les collerettes (6c, 8c) sont pressées l'une avec l'autre.
